(19) Europäisches Patentamt / European Patent Office / Office européen des brevets

(11) **EP 4 438 894 A1**

(12) # DEMANDE DE BREVET EUROPEEN

(43) Date de publication:
**02.10.2024 Bulletin 2024/40**

(21) Numéro de dépôt: **24164018.4**

(22) Date de dépôt: **18.03.2024**

(51) Classification Internationale des Brevets (IPC):
***F03D 17/00*** *(2016.01)*

(52) Classification Coopérative des Brevets (CPC):
**F03D 17/007; F03D 17/006;** F05B 2270/32

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.03.2023 FR 2302940**

(71) Demandeur: **IFP Energies nouvelles**
**92500 Rueil-Malmaison (FR)**

(72) Inventeur: **COLLET, David**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE DETERMINATION DE LA VITESSE DE VENT LIBRE POUR UNE FERME D EOLIENNES**

(57) La présente invention concerne un procédé de détermination de la vitesse du vent libre ($V_\infty$) pour une ferme d'éoliennes, au moyen de mesures (MES), d'un modèle de la ferme d'éoliennes (MOD), et d'un filtre de Kalman d'ensemble (KEN).

Figure 1

**EP 4 438 894 A1**

**Description**

**Domaine technique**

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance d'une ferme d'éoliennes.

Une ferme d'éoliennes, également appelé parc éolien ou centrale éolienne est un site regroupant une pluralité d'éoliennes produisant de l'électricité. Ce site peut être sur terre ou en mer. On distingue ainsi des fermes éoliennes terrestres et des fermes éoliennes « offshore », c'est-à-dire en mer.

Les éoliennes de ces fermes sont généralement des éoliennes à axe de rotation horizontal qui disposent d'un système pour orienter l'axe de rotation horizontal dans le sens de la direction du vent, afin de maximiser l'énergie récupérée par l'éolienne. Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite éventuellement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine (modulateur, commande, multiplicateur, générateur, ...). La nacelle peut tourner pour orienter le rotor dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;

- éventuellement une transmission, composée notamment de deux axes (arbre mécanique du rotor et arbre mécanique de la machine électrique) reliés par un multiplicateur (boîte de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes et des fermes d'éoliennes doit continuer à être amélioré. La perspective d'augmentation de production d'énergie éolienne nécessite le développement d'outils de production efficaces, et d'outils de contrôle avancé pour améliorer les performances des machines et des fermes d'éoliennes.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Pour optimiser le contrôle, il est important de connaître la vitesse du vent libre pour la ferme d'éoliennes. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmente (aujourd'hui, 5 MW, bientôt 12 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaitre la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253).

Toutefois, le capteur LIDAR est un capteur onéreux. De plus, le développement d'un tel capteur LIDAR étant relativement récent, il est encore difficile de savoir en transformant les mesures brutes du capteur LIDAR, comment exploiter les caractéristiques du champ de vent telles que la vitesse du vent, la direction du vent, le cisaillement du vent, la turbulence, le facteur d'induction, etc. Un tel capteur LIDAR nécessite donc une mise en oeuvre complexe pour déterminer la vitesse du vent dans le plan du rotor.

Selon une troisième technique, la vitesse de vent libre peut être obtenue à partir d'un système de contrôle et d'acquisition de données en temps réel (SCADA). Un système de contrôle et d'acquisition de données en temps réel (SCADA) (de l'anglais : « Supervisory Control And Data Acquisition ») est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). De préférence, toutes les mesures peuvent être obtenues à partir du système SCADA, ce qui facilite la mise en oeuvre du procédé sans instrumentation particulière. Par exemple, la demande de brevet FR3107094 (US2021/0279389) concerne la détermination du vent dans le plan du rotor à partir de données SCADA.

Toutefois, les données obtenues par un système SCADA ou par un capteur LiDAR ne permettent de directement déterminer la vitesse de vent libre. Il est nécessaire de traiter ces données pour obtenir cette information de la vitesse de vent libre.

## Résumé de l'invention

Le but de l'invention est de déterminer en temps réel la vitesse de vent libre pour une ferme d'éoliennes, de manière robuste et directement exploitable, par exemple pour le contrôle et/ou le diagnostic de l'éolienne. Pour cela, l'invention concerne un procédé de détermination de la vitesse du vent libre pour une ferme d'éoliennes, au moyen de mesures (notamment des mesures SCADA), d'un modèle de la ferme d'éoliennes, et d'un filtre de Kalman d'ensemble. L'utilisation d'un filtre de Kalman d'ensemble permet une détermination en temps réel et de manière robuste de la vitesse de vent libre.

L'invention concerne également un procédé de contrôle d'une ferme d'éoliennes, et une ferme d'éoliennes mettant en oeuvre le procédé selon l'invention.

L'invention concerne un procédé de détermination de la vitesse de vent libre pour une ferme d'éoliennes. Pour ce procédé, on met en oeuvre les étapes suivantes :

a. On mesure, pour au moins une éolienne de ladite ferme d'éoliennes, la vitesse du vent dans le plan du rotor de ladite éolienne, l'intensité de turbulence dans le plan du rotor de ladite éolienne, la direction du vent dans le plan du rotor de ladite éolienne, et la puissance générée par ladite éolienne ;

b. On construit un modèle de ladite ferme d'éoliennes qui relie au moins la vitesse de vent libre à la vitesse du vent dans le plan du rotor, à l'intensité de la turbulence au niveau dans le plan du rotor, à la direction du vent dans le plan du rotor et à la puissance générée par chaque éolienne ; et

c. On détermine la vitesse de vent libre pour ladite ferme d'éoliennes au moyen d'un filtre de Kalman d'ensemble, notamment à partir d'incertitudes estimées par des tirages de Monte Carlo, appliqué audit modèle de ladite ferme d'éoliennes et à partir desdites mesures de la vitesse du vent dans le plan du rotor, de l'intensité de la turbulence dans le plan du rotor, de la direction du vent dans le plan du rotor et de la puissance générée.

Selon un mode de réalisation, ledit modèle de ferme d'éoliennes relie en outre ladite direction de vent libre et/ou ladite intensité de vent libre à ladite vitesse du vent dans le plan du rotor, de l'intensité de la turbulence dans le plan du rotor, de la direction du vent dans le plan du rotor et de la puissance générée, et on détermine en outre une direction du vent libre et/ou une intensité de turbulence de vent libre.

Conformément à une mise en oeuvre, ledit modèle de ferme et une matrice de covariance du filtre de Kalman d'ensemble dépend d'un biais d'alignement entre le nord de la girouette d'au moins une éolienne et le nord théorique, et détermine en outre ledit biais d'alignement. Selon un aspect, la matrice de covariance de sortie dudit filtre de Kalman d'ensemble dépend de fonctions trigonométriques de la direction du vent mesurée dans le plan du rotor, de préférence en prenant en compte la covariance entre lesdites fonctions trigonométriques.

Avantageusement, la matrice de covariance de l'erreur dudit filtre de Kalman d'ensemble dépend d'une approximation de fonctions trigonométriques de la direction du vent libre, de préférence au moyen d'une gaussienne à deux dimensions axée sur la tangente d'un cercle unité de la direction du vent.

Conformément à un mode de réalisation, on détermine ladite vitesse de vent libre au moyen des étapes suivantes :

i. on initialise k=0, le vecteur d'état $x_0$ et un état de la matrice de covariance $P(0|0)$ ;
ii. à chaque instant k différent de 0, on propage l'incertitude sur l'estimation de l'état

$$P_{k|k-1} = F_k P_{k-1} F_k^T + Q_{k-1}$$

avec $F_k$ le modèle dynamique de l'état, $P_{k|k-1}$ la covariance d'erreur à partir des mesures dudit instant k-1, $P_{k-1}$ la variance d'erreur à partir des mesures dudit instant k-1 et $Q_{k-1}$ la matrice de covariance de l'erreur d'estimation sur $x_{k-1}$ ;
iii. à chaque instant k différent de 0, on acquiert lesdites mesures y(k) ; et
iv. à chaque instant k différent de 0, on détermine la vitesse du vent libre en tirant aléatoirement N états $\hat{X}_{k|k-1} = \{\hat{x}_{k,1|k-1}, ..., \hat{x}_{k,N|k-1}\}$ selon une distribution gaussienne $(x_{k|k-1}, P_{k|k-1})$ et en appliquant les équations suivantes

$$K_k = P_{x,y} S_k^{-1}$$

et

$$\hat{x}_k = \hat{x}_{k|k-1} + K_k \tilde{y}_k$$

$$P_k = P_{k|k-1} - K_k S_k K_k^T$$

avec k le temps discret, $K_k$ le gain du filtre Kalman d'ensemble, $P_{x,y}$ la covariance entre les états et les sorties du modèle de la ferme d'éoliennes, $S_k$ la covariance de l'erreur de prédiction du modèle, $P_{k|k-1}$ la covariance d'erreur à partir des mesures dudit instant k-1, $P_k$ la variance d'erreur à partir des mesures dudit instant k, $x_k$ l'estimation de l'état x à partir des mesures du temps k, $x_{k|k-1}$ l'estimation de l'état x à partir des mesures du temps k-1, $\tilde{y}_k$ la différence entre la sortie mesurée $y_k$ et la sortie donnée par le modèle de la ferme d'éoliennes à partir de l'état estimé à l'instant précédent.

Selon une option de réalisation, on mesure ladite vitesse du vent dans le plan du rotor, l'intensité de turbulence dans le plan du rotor, la direction du vent dans le plan du rotor et la puissance aérodynamique à partir de mesures de la vitesse de rotation du rotor, l'angle d'inclinaison des pales de l'éoliennes, et la puissance générée par l'éolienne.

De plus, l'invention concerne un procédé de contrôle d'une ferme d'éoliennes, pour lequel on met en oeuvre les étapes suivantes :

a. On détermine ladite vitesse de vent libre au moyen du procédé selon l'une des caractéristiques précédentes ; et
b. On contrôle ladite ferme d'éoliennes en fonction de la vitesse de vent libre.

En outre, l'invention concerne une ferme d'éoliennes. Au moins une éolienne comporte des moyens de mesure de la vitesse du vent dans le plan du rotor de ladite éolienne, l'intensité de turbulence dans le plan du rotor de ladite éolienne, la direction du vent dans le plan du rotor de ladite éolienne, et la puissance générée par ladite éolienne, et en ce que ladite ferme d'éoliennes comprend des moyens de détermination de la vitesse de vent libre apte à mettre en oeuvre le procédé selon l'une des caractéristiques précédentes.

Selon un mode de réalisation, la ferme d'éoliennes comporte un système de contrôle et d'acquisition de données en temps réel qui comprend lesdits moyens de mesure de la vitesse du vent dans le plan du rotor de ladite éolienne, l'intensité de turbulence du vent dans le plan du rotor, la direction du vent dans le plan du rotor de ladite éolienne, et la puissance générée par ladite éolienne.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un mode de réalisation de l'invention.

La figure 2 illustre, pour un exemple, des courbes de la vitesse du vent dans le plan du rotor des éoliennes d'une ferme d'éoliennes.

La figure 3 illustre, pour l'exemple de la figure 2, des courbes de la direction du vent dans le plan du rotor des éoliennes de la ferme d'éoliennes en fonction du temps.

La figure 4 illustre, pour l'exemple des figures 2 et 3, des courbes de l'intensité de turbulence dans le plan du rotor des éoliennes de la ferme d'éoliennes en fonction du temps.

La figure 5 illustre, pour l'exemple des figures 2 à 4, des courbes de la puissance générée par chaque éolienne de la ferme d'éoliennes en fonction du temps.

La figure 6 illustre, pour l'exemple des figures 2 à 5, des courbes de l'angle de lacet des éoliennes de la ferme d'éoliennes en fonction du temps.

La figure 7 illustre, pour l'exemple des figures 2 à 6, des courbes de la vitesse de vent libre en fonction du temps, avec une courbe de référence, et deux courbes des vitesses obtenues par deux modes de réalisation du procédé selon l'invention.

La figure 8 illustre, pour l'exemple des figures 2 à 7, des courbes des fonctions trigonométriques de la direction du vent libre en fonction du temps, avec une courbe de référence, et deux courbes obtenues par deux modes de réalisation du procédé selon l'invention.

La figure 9 illustre, pour l'exemple des figures 2 à 8, des courbes de l'intensité de turbulence du vent libre en fonction du temps, avec une courbe de référence, et deux courbes obtenues par deux modes de réalisation du procédé selon l'invention.

La figure 10 illustre, pour l'exemple des figures 2 à 9, des courbes des biais de l'alignement des girouettes des différentes éoliennes de la ferme déterminés par le procédé selon l'invention.

**Description des modes de réalisation**

La présente invention concerne un procédé de détermination en temps réel de la vitesse de vent libre pour une ferme d'éoliennes. Une ferme d'éoliennes, également appelé parc éolien ou centrale éolienne, est un site regroupant une pluralité d'éoliennes produisant de l'électricité. La vitesse de vent libre est la vitesse du vent qu'il y aurait eu sur le site de la ferme d'éoliennes en l'absence de la ferme d'éoliennes. Cette vitesse de vent libre est utile notamment pour le contrôle (orientation, régulation de couple et de vitesse) et/ou le diagnostic et/ou la surveillance de la ferme d'éoliennes.
Selon un mode de réalisation de l'invention, le procédé peut déterminer en outre une direction du vent libre et/ou une intensité de turbulence de vent libre. La direction du vent libre est la direction du vent qu'il y aurait eu sur le site de la ferme d'éoliennes en l'absence de la ferme d'éoliennes. L'intensité de turbulence de vent libre est l'intensité de turbulence qu'il y aurait eu sur le site de la ferme d'éoliennes en l'absence de la ferme d'éoliennes. Ces caractéristiques du vent libre peuvent également être utiles pour le contrôle et/ou le diagnostic et/ou la surveillance de la ferme d'éoliennes.
Le procédé selon l'invention comprend les étapes suivantes :

1) Mesures de la vitesse de vent, de l'intensité de turbulence, de la direction du vent et de la puissance générée
2) Construction d'un modèle de la ferme d'éoliennes
3) Détermination de la vitesse de vent libre

Les étapes 2 et 3 peuvent être mises en oeuvre par des moyens informatiques, notamment un ordinateur, un processeur ou un calculateur. Les étapes sont détaillées dans la suite de la description.

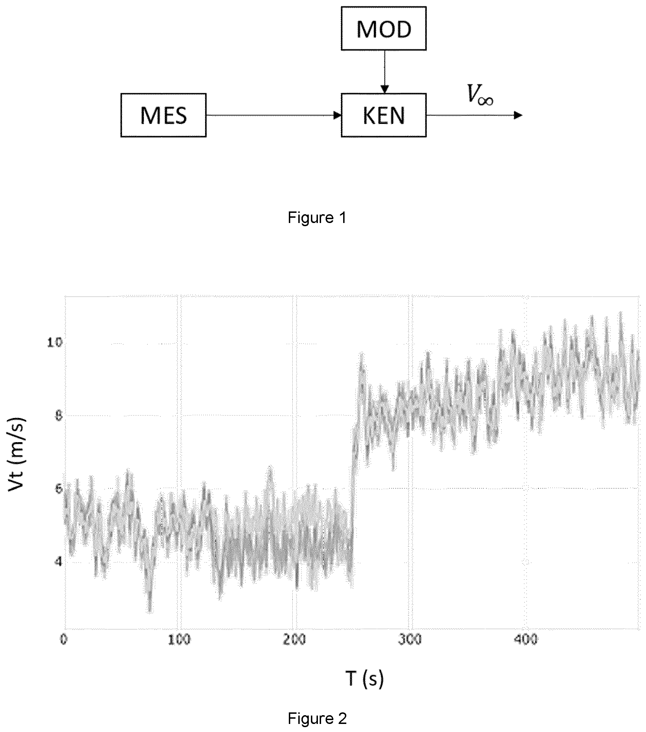

La figure 1 illustre, schématiquement et de manière non limitative, les étapes du procédé de détermination de la vitesse du vent libre selon un mode de réalisation de l'invention. On mesure (MES) la vitesse du vent, l'intensité de turbulence et la direction du vent dans le plan du rotor d'au moins une éolienne, ainsi que la puissance générée par au moins une éolienne de la ferme d'éoliennes. On construit un modèle de la ferme d'éoliennes (MOD). Puis, on détermine la vitesse de vent libre ($V_\infty$) au moyen d'un filtre de Kalman d'ensemble (KEN) appliqué au modèle de la ferme d'éoliennes (MOD) et aux mesures (MES).

1) Mesures de la vitesse de vent, de l'intensité de turbulence, de la direction du vent et de la puissance générée

Lors de cette étape, on mesure, pour au moins une éolienne de la ferme d'éoliennes :

- La vitesse du vent dans le plan du rotor de l'éolienne,
- L'intensité de turbulence du vent dans le plan du rotor de l'éolienne,
- La direction du vent dans le plan du rotor de l'éolienne, et
- La puissance générée par l'éolienne.

De préférence, les mesures sont réalisées pour toutes les éoliennes de la ferme d'éoliennes, afin d'obtenir des informations précises en différents emplacements de la ferme d'éolienne, de manière à augmenter la précision et la robustesse de la détermination de la vitesse de vent libre.

Avantageusement, ces mesures peuvent être réalisées directement.

Alternativement, ces mesures peuvent être directement dérivées notamment des mesures de

- La vitesse de rotation du rotor de l'éolienne,
- L'angle de l'inclinaison des pales de l'éolienne, et
- La puissance générée par l'éolienne.

Selon un mode de réalisation, la vitesse et la direction du vent dans le plan du rotor peuvent être mesurées, notamment au moyen d'au moins un anémomètre, et/ou par des mesures au moyen d'au moins un système de contrôle et d'acquisition de données en temps réel SCADA (de l'anglais : « Supervisory Control And Data Acquisition »), ou par tout capteur analogue. Un système de contrôle et d'acquisition de données en temps réel SCADA est un système de télégestion à grande échelle permettant de traiter en temps réel un grand nombre de télémesures et de contrôler à distance des installations techniques. C'est une technologie industrielle dans le domaine de l'instrumentation, dont les implémentations peuvent être considérées comme des structures d'instrumentation incluant une couche de type intergiciel (de l'anglais « middleware »). En outre, le système SCADA peut permettre de prendre en compte au moins une autre mesure pour rendre la détermination de la vitesse du vent dans le plan du rotor plus précise. Il peut s'agir notamment de températures, de données électriques, de vibrations, etc. Les températures peuvent informer sur les pertes mécaniques effectives, et permettent ainsi d'affiner la modélisation de l'éolienne. L'accélérométrie, associée à une compréhension modale et vibratoire suffisamment fine et fidèle de la structure, peut permettre de remonter à une estimation de l'état du vent et des turbulences impactant l'éolienne.

Conformément une mise en oeuvre de l'invention, la puissance générée par l'éolienne peut être mesurée par un système SCADA.

En variante, au moins une des mesures peut être obtenue par un capteur dédié. Pour cette réalisation :

- pour la mesure de la vitesse de rotation du rotor, on peut utiliser un capteur de rotation angulaire du rotor, et/ou
- pour la mesure de l'angle d'inclinaison des pales, on peut utiliser un capteur angulaire des pales, et/ou
- pour la mesure de la puissance générée par la machine de conversion, on peut utiliser un capteur de tension connue et contrôlée, et un capteur d'intensité pour la mesure du courant débité par la génératrice de l'éolienne.

2) Construction d'un modèle de la ferme d'éoliennes

Lors de cette étape, on construit un modèle de la ferme d'éoliennes. Le modèle de la ferme d'éolienne relie la vitesse de vent libre à la vitesse du vent dans le plan du rotor d'au moins une éolienne, à l'intensité de turbulence au niveau du rotor d'au moins une éolienne, à la direction du vent au niveau d'au moins une éolienne, et à la puissance générée par au moins une éolienne. En d'autres termes, le modèle a pour entrée la vitesse de vent libre, et a pour sorties la vitesse du vent dans le plan du rotor d'au moins une éolienne, l'intensité de turbulence au niveau du rotor d'au moins une éolienne, la direction du vent dans le plan du rotor d'au moins une éolienne, et la puissance générée par au moins une éolienne.

Pour le mode de réalisation, pour lequel on détermine en outre une direction du vent libre et/ou une intensité de turbulence de vent libre, le modèle de la ferme d'éoliennes a pour entrées supplémentaires la direction du vent libre et/ou l'intensité de turbulence de vent libre.

Selon un mode de réalisation de l'invention, le modèle de la ferme d'éoliennes peut avoir également comme entrées :

- Le désalignement effectif de chaque éolienne, appelé également l'angle de lacet, ce désalignement peut servir notamment pour la redirection de sillage pour le contrôle de la ferme d'éoliennes, et/ou
- Le facteur d'induction du rotor de chaque éolienne (le facteur d'induction est un coefficient de freinage du vent dans la zone d'induction de l'éolienne).

Ces entrées supplémentaires permettent que le modèle de la ferme d'éoliennes soit bien représentatif des phénomènes physiques au sein de la ferme d'éoliennes.

Selon un exemple non limitatif, le modèle de la ferme d'éoliennes peut s'écrire de la manière suivante :

$$y = \begin{pmatrix} \bar{V} \\ \bar{P} \\ \bar{\theta} \\ \overline{TI} \end{pmatrix} = h(U_\infty, \gamma, a, p)$$

avec y la sortie du modèle, h une fonction du modèle, $\bar{V}$ la vitesse du vent dans le plan du rotor de chaque éolienne, $\bar{P}$ la puissance générée par chaque éolienne, $\bar{\theta}$ la direction du vent dans le plan du rotor de chaque éolienne, $\overline{TI}$ l'intensité de turbulence dans le plan du rotor de chaque éolienne, $\gamma$ le désalignement effectif de chaque éolienne, $a$ le facteur d'induction de chaque éolienne, p des paramètres du modèle et $U_\infty$ un vecteur défini par : $U_\infty = \begin{pmatrix} V_\infty \\ \theta_\infty \\ TI_\infty \end{pmatrix}$ avec $V_\infty$

la vitesse de vent libre, $\theta_\infty$ la direction du vent libre, $TI_\infty$ l'intensité de turbulence de vent libre (alternativement, pour le mode de réalisation pour lequel le procédé détermine uniquement la vitesse de vent libre $U_\infty$ peut s'écrire $U_\infty = V_\infty$). De plus, en variante, la fonction h peut ne dépendre que de $U_\infty$.

La fonction h peut être définie comme un modèle d'ingénierie de ferme d'éoliennes. A titre illustratif, il peut s'agit du modèle Floris développé par NREL (National Renewable Energy Laboratory) ou du modèle FarmShadow™ développé par IFP Energies nouvelles.

<u>3) Détermination de la vitesse de vent libre</u>

Lors de cette étape, on détermine la vitesse de vent libre pour la ferme d'éoliennes, au moyen d'un filtre de Kalman d'ensemble, notamment à partir d'incertitudes estimées par des tirages de Monte Carlo (autrement dit des tirages aléatoires), appliqué audit modèle de ladite ferme d'éoliennes construit à l'étape 2 et à partir desdites mesures obtenues à l'étape 1. En d'autres termes, la vitesse de vent libre est déterminée par un filtre de Kalman d'ensemble, qui met en oeuvre le modèle de la ferme d'éoliennes, et qui utilise les mesures de la vitesse du vent dans le plan du rotor d'au moins une éolienne, la direction du vent dans le plan du rotor d'au moins une éolienne, la puissance générée par au moins une éolienne, et l'intensité de turbulence dans le plan du rotor d'au moins une éolienne. Le filtre de Kalman est appliqué au modèle de la ferme d'éolienne pour reconstruire l'état, en l'occurrence la vitesse de vent libre, en fonction des mesures, c'est-à-dire les sorties du modèle de la ferme d'éoliennes.

Un filtre de Kalman est un filtre à réponse impulsionnelle infinie qui estime les états d'un système dynamique à partir d'une série de mesures incomplètes ou bruitées. Le filtre de Kalman d'ensemble (noté EnKF de l'anglais « ensemble Kalman filter ») est une variante du filtre de Kalman adaptée aux problèmes de très grandes dimensions. Le filtre de Kalman d'ensemble est un filtre de Kalman qui utilise des tirages de Monte-Carlo pour estimer le gain de Kalman, l'objectif final étant d'estimer l'état du système en prenant en compte les incertitudes sur le modèle et sur les mesures. L'idée du filtre de Kalman d'ensemble est de représenter la loi recherchée par un échantillon de la variable d'état et par suite la matrice de covariance du filtre de Kalman devient une matrice de covariance échantillonnée. Le filtre de Kalman d'ensemble est robuste, car il permet de réduire les incertitudes, de plus, il est plus facile à mettre en oeuvre pour les problèmes non linéaires que le filtre de Kalman sans parfum (UKF de l'anglais « Unscented Kalman Filter »).

Selon un mode de réalisation de l'invention, on peut déterminer la vitesse de vent libre au moyen des étapes suivantes :

i. on initialise k=0, le vecteur d'état $x_0$ et un état de la matrice de covariance $P(0|0)$ ;

ii. à chaque instant k différent de 0, on propage l'incertitude sur l'estimation de l'état

$$P_{k|k-1} = F_k P_{k-1} F_k^T + Q_{k-1}$$

avec $F_k$ le modèle dynamique de l'état, $P_{k|k-1}$ la covariance d'erreur à partir des mesures dudit instant k-1, $P_{k-1}$ la variance d'erreur à partir des mesures dudit instant k-1 et $Q_{k-1}$ la matrice de covariance de l'erreur d'estimation sur $x_{k-1}$ ;

iii. à chaque instant k différent de 0, on acquiert lesdites mesures y(k) ; et

iv. à chaque instant k différent de 0, on détermine la vitesse du vent dans le plan du rotor en tirant aléatoirement N états $\hat{X}_{k|k-1} = \{\hat{x}_{k,1|k-1}, ..., \hat{x}_{k,N|k-1}\}$ selon une distribution gaussienne $(x_{k|k-1}, P_{k|k-1})$ et en appliquant les équations

$$\hat{x}_k = \hat{x}_{k|k-1} + K_k \tilde{y}_k$$

suivantes $$K_k = P_{x,y} S_k^{-1}$$ et $$P_k = P_{k|k-1} - K_k S_k K_k^T$$ avec k, le temps discret, $K_k$ le gain du filtre Kalman d'ensemble, $P_{x,y}$ la covariance entre les états et les sorties du modèle, $S_k$ la covariance de l'erreur de prédiction du modèle, $P_{k|k-1}$ la covariance d'erreur à partir des mesures dudit instant k-1, $P_k$ la variance d'erreur à partir des mesures dudit instant k, $x_k$ l'estimation de l'état x à partir des mesures du temps k, $x_{k|k-1}$ l'estimation de l'état x à partir des mesures du temps k-1, $\tilde{y}_k$ la différence entre la sortie mesurée $y_k$ et la sortie donnée par le modèle de la ferme d'éolienne à partir de l'état estimé à l'instant précédent.

Conformément à une mise en oeuvre de l'invention, on peut déterminer en outre un biais dans l'alignement entre le nord de la girouette de chaque éolienne et le nord théorique (appelé également « vrai nord »). Pour cette mise en oeuvre de l'invention, le modèle de ferme et la matrice de covariance du filtre de Kalman d'ensemble dépendent du biais d'alignement. Autrement dit, ce biais peut être une entrée du modèle de la ferme d'éoliennes. On appelle girouette d'une éolienne, un capteur qui permet de déterminer l'orientation angulaire de l'éolienne par rapport au nord théorique. En effet, en pratique, les mesures de direction du vent sont souvent biaisées à cause d'un tel décalage entre le nord de la girouette et le nord théorique. La prise en compte du biais dans la matrice de covariance, permet une détermination robuste de la vitesse de vent libre, même en cas de mauvais alignement des girouettes des éoliennes de la ferme d'éoliennes.

Selon un mode de réalisation de l'invention, la matrice de covariance de sortie du filtre de Kalman d'ensemble peut dépendre de fonctions trigonométriques de la direction du vent mesurée. En l'occurrence, les fonctions trigonométriques peuvent être les fonctions cosinus et sinus de la direction de vent mesurée dans le plan du rotor des éoliennes. Ainsi, il est possible de palier les problèmes de périodicité sur les mesures de direction du vent, qui peuvent faire exploser les estimations de covariance. De préférence, pour ce mode de réalisation, on peut prendre en compte la covariance entre lesdites fonctions trigonométriques, étant donné que les fonctions cosinus et sinus sont dépendantes. Ainsi, les performances du filtre de Kalman d'ensemble peuvent être améliorées.

Selon une option de réalisation de l'invention, la matrice de covariance de l'erreur du filtre de Kalman d'ensemble peut dépendre d'une approximation de fonctions trigonométriques de la direction du vent libre. En l'occurrence, les fonctions trigonométriques peuvent être les fonctions cosinus et sinus de la direction de vent libre. Cette approximation est utile notamment lorsque la direction de la vitesse de vent libre est proche de 0°. De préférence, pour ce mode de réalisation, la matrice de covariance de l'erreur du filtre de Kalman d'ensemble peut être déterminée au moyen d'une gaussienne à deux dimensions axée sur la tangente d'un cercle unité de la direction du vent libre. Ainsi, on évite des éventuels problèmes d'inversion de matrice de covariance de sortie. Dans la suite de la description, cette option de réalisation est appelée « méthode trigonométrique », les réalisations ne mettant pas en oeuvre cette réalisation est appelée « méthode directe ».

Dans la suite de la description, on illustre, de manière non limitative, différentes réalisations du filtre de Kalman d'ensemble appliqué au procédé selon l'invention.

On peut considérer l'équation dynamique du système suivant :

$$x_k = F_k x_{k-1} + v_{k-1}$$

Avec k le temps discret, $x_k$ l'état du système à l'instant k, $x_{k-1}$ l'état du système à l'instant k-1, $F_k$ la matrice de la dynamique du système à l'instant k, $v_{k-1}$ l'erreur de prédiction de l'état à l'instant suivant à l'instant k-1 avec $v_k$ une distribution gaussienne définie par $v_k \sim (0, Q_k)$ avec $Q_k$ la matrice de covariance de l'erreur d'estimation sur $x_k$.

On peut propager l'incertitude $P_k$ accumulée dans le processus à l'instant k de la manière suivante :

$$P_{k|k-1} = F_k P_{k-1} F_k^T + Q_{k-1}$$

La matrice de covariance $P_{k|k-1}$ donne une idée de l'incertitude sur l'état prédit $\hat{x}_{k|k-1}$ à partir de l'état estimé à l'instant k-1. La distribution de $x_k$ est une distribution gaussienne telle que

$$x_k \sim \mathcal{N}(\hat{x}_{k|k-1}, P_{k|k-1}).$$

Pour calculer le gain de Kalman, qui sert à pondérer la connaissance sur l'état estimé par le modèle et la mesure, on peut tirer aléatoirement N états de $\hat{X}_{k|k-1} = \{\hat{x}_{k,1|k-1}, ..., \hat{x}_{k,N|k-1}\}$ selon la distribution de $x_k \sim \mathcal{N}(x_{k|k-1}, P_{k|k-1})$

Le système a une équation de sortie non linéaire qui peut s'écrire :

$$y_k = h(x_k, u_k) + \varepsilon_k$$

Avec $y_k$ la sortie du système à l'instant k, $u_k$ l'entrée exogène (extérieur au système) au système à l'instant k, et $\varepsilon_k$ l'erreur à l'instant k, l'erreur étant une distribution gaussienne de la forme $\varepsilon_k \sim \mathcal{N}(0, R_k)$, où $R_k$ est la covariance de l'incertitude sur la sortie.

On applique l'équation de sortie à chaque des états $\hat{X}_{k|k-1} = \{\hat{x}_{k,1|k-1}, ..., \hat{x}_{k,N|k-1}\}$ en supposant connu $u_k$, de manière à obtenir N sorties $\hat{Y}_{k|k-1} = \{\hat{y}_{k|k-1,1}, ..., \hat{y}_{k-1,N}\}$.

On utilise également l'équation de sortie pour estimer $\hat{y}_{k|k-1}$ à partir de $\hat{x}_{k|k-1}$. Et on note $y_k$ la mesure obtenue à l'instant k.

On pose $S_k$ la covariance de l'erreur de prédiction du modèle à partir d'un état prédit incertain, de telle sorte que :

$$y_k \sim \mathcal{N}(\hat{y}_{k|k-1}, S_k)$$

$$S_k = \text{cov}(\hat{Y}_k - \hat{y}_{k|k-1}) + R_k$$

Avec $R_k$ l'erreur de prédiction du modèle sans incertitude sur l'état du système, telle que

$$y_k \sim \mathcal{N}(\hat{y}_k, R_k)$$

avec $\hat{y}_k$ la sortie du modèle avec l'état connu de $x_k$.

On peut poser $P_{x,y}$ la covariance entre les états tirés aléatoirement $\hat{X}_{k|k-1}$ et les sorties du modèle correspondant $\hat{Y}_{k|k-1}$

$$P_{x,y} = \text{cov}(\hat{X}_{k|k-1}, \hat{Y}_{k|k-1})$$

Et $\tilde{y}_k$ la différence entre la sortie mesurée $y_k$ et la sortie donnée par le modèle à partir de l'état estimé à l'instant précédent $y_{k|k\text{-}1}$.

Le gain de Kalman, noté $K_k$ est un ratio entre la covariance de l'état prédit et la sortie sachant l'état précédent $P_{x,y}$ et la covariance de la sortie sachant l'état précédent $S_k$.

$$K_k = P_{x,y} S_k^{-1}$$

Le gain de Kalman permet de prédire l'état $\tilde{x}_k$ et mettre à jour la matrice de covariance de l'incertitude sur l'état prédit $P_k$ telle que $x_k \sim \mathcal{N}(\hat{x}_k, P_x)$ et

$$\hat{x}_k = \hat{x}_{k|k-1} + K_k \tilde{y}_k$$

$$P_k = P_{k|k-1} - K_k S_k K_k^T$$

Pour améliorer les performances du filtre de Kalman d'ensemble, on peut ajuster les hyperparamètres suivants : le nombre N d'états tirés dans le tirage de Monte-Carlo, ainsi que les matrices de covariance de l'incertitude sur le modèle dynamique et le modèle de sortie, $Q_k$ et $R_k$.

Pour le mode de réalisation de la méthode directe, on peut mettre en oeuvre les étapes décrites ci-dessous à titre d'exemple.

Pour cette méthode directe, on peut considérer le vecteur d'état $x_k$ constant et incertain de telle sorte que :

$$x_k = \begin{pmatrix} V_{\infty,k} \\ \theta_{\infty,k} \\ \log \text{TI}_{\infty,k} \end{pmatrix} = I_3 \underbrace{\begin{pmatrix} V_{\infty,k-1} \\ \theta_{\infty,k-1} \\ \log \text{TI}_{\infty,k-1} \end{pmatrix}}_{x_{k-1}} + v_{k-1}$$

Avec $V_{\infty,k}$ la vitesse de vent libre à l'instant k, $\theta_{\infty,k}$ la direction du vent libre à l'instant k et $TI_{\infty,k}$ l'intensité de turbulence du vent libre à l'instant k, $I_3$ la matrice identité de trois dimensions, et $v_{k-1}$ la part d'incertitude du vent libre qui permet l'évolution du vent libre au cours du temps. Pour cette réalisation, on peut considérer $\log TI_{\infty,k}$ car la distribution de $TI_\infty$ est du type log-normale, Rayleigh ou Poisson en étant strictement positif.

Dans ce cas, la matrice de covariance $Q_k$ peut être prise diagonale et constante dans le temps de telle sorte que :

$$Q_k = \text{diag}([\varepsilon_V, \varepsilon_\theta, \varepsilon_{\text{TI}}])$$

Avec $\varepsilon_V$, $\varepsilon_\theta$, $\varepsilon_{TI}$ des paramètres positifs prédéterminés.

Pour la variante de réalisation pour laquelle on prend en compte les fonctions trigonométriques de la direction du vent libre, la sortie du modèle peut s'écrire :

$$y_k = \begin{pmatrix} \bar{V} & \bar{P} & \cos\bar{\theta} & \sin\bar{\theta} & \overline{\text{TI}} \end{pmatrix}^T$$

En considérant les sorties toutes indépendantes, la matrice de covariance $R_k$ peut être une matrice diagonale et constante dans le temps qui s'écrit :

$$R_k = \begin{pmatrix} \varepsilon_{\overline{V}} I_{n_{\text{turbines}}} & 0 & 0 & 0 \\ 0 & \varepsilon_{\overline{\rho}} I_{n_{\text{turbines}}} & 0 & 0 \\ 0 & 0 & \varepsilon_{\overline{\theta}} I_{2n_{\text{turbines}}} & 0 \\ 0 & 0 & 0 & \varepsilon_{\overline{TI}} \end{pmatrix}$$

avec $n_{\text{turbines}}$ le nombre de turbines dans la ferme d'éolienne, $In_{\text{turbines}}$ la matrice identité de dimension $n_{\text{turbines}}$, $\varepsilon_{\overline{V}}$, $\varepsilon_{\overline{\theta}}$, $\varepsilon_{\overline{TI}}$ et $\varepsilon_{\overline{\rho}}$ sont des paramètres positifs prédéterminés en fonction de la qualité des mesures.

Alternativement on peut déterminer une matrice Rk qui prend en compte les covariances entre $cos\overline{\theta}$ et $sin\overline{\theta}$ pour améliorer les performances du filtre de Kalman d'ensemble.

Pour le mode de réalisation de la méthode trigonométrique, on peut mettre en oeuvre les étapes décrites ci-dessous à titre d'exemple.

Pour cela, on estime la direction de vent libre par l'estimation de fonctions trigonométriques de la direction de vent libre.

Dans ce cas, on peut faire un développement limité d'ordre un des cosinus et sinus de la direction de vent libre autour de la direction du vent libre :

$$\theta_{\infty,k} = \theta_\infty + v_{\theta,k}$$

$$\begin{aligned} \cos\theta_{\infty,k} &= \cos(\theta_\infty + v_{\theta,k}) \\ &= \cos\theta_\infty \cos v_{\theta,k} - \sin\theta_\infty \sin v_{\theta,k} \\ &\simeq \cos\theta_\infty - \sin\theta_\infty v_{\theta,k} \end{aligned}$$

$$\begin{aligned} \sin\theta_{\infty,k} &= \sin(\theta_\infty + v_{\theta,k}) \\ &= \sin\theta_\infty \cos v_{\theta,k} + \cos\theta_\infty \sin v_{\theta,k} \\ &\simeq \sin\theta_\infty + \cos\theta_\infty v_{\theta,k} \end{aligned}$$

Ensuite, on peut calculer la covariance de $(\cos\theta_{\infty,k}, \sin\theta_{\infty,k})^T$ et écrire la matrice de covariance $Q_k$ de la manière suivante :

$$Q_k = \begin{pmatrix} \varepsilon_V & 0 & 0 & 0 \\ 0 & \sin^2\theta_{\infty,k}\varepsilon_\theta & -\sin\theta_{\infty,k}\cos\theta_{\infty,k}\varepsilon_\theta & 0 \\ 0 & -\sin\theta_{\infty,k}\cos\theta_{\infty,k}\varepsilon_\theta & \cos^2\theta_{\infty,k}\varepsilon_\theta & 0 \\ 0 & 0 & 0 & \varepsilon_{TI} \end{pmatrix}$$

Et l'équation dynamique du système peut s'écrire :

$$x_k = \begin{pmatrix} V_{\infty,k} \\ \cos\theta_{\infty,k} \\ \sin\theta_{\infty,k} \\ \log\mathrm{TI}_{\infty,k} \end{pmatrix} = I_4 \underbrace{\begin{pmatrix} V_{\infty,k-1} \\ \cos\theta_{\infty,k-1} \\ \sin\theta_{\infty,k-1} \\ \log\mathrm{TI}_{\infty,k-1} \end{pmatrix}}_{x_{k-1}} + v_{k-1}$$

$$v_{k-1} \in \mathbb{R}^4 \sim \mathcal{N}(0, Q_{k-1})$$

Avec $I_4$ la matrice identité de dimension 4 et                                            .

Avantageusement, on peut prendre comme covariance des cosinus et sinus de la direction de vent libre une gaussienne à deux dimensions axée selon la tangente du cercle unité formé par la direction du vent libre à l'instant k. Dans ce but, on peut considérer la matrice de rotation P suivante :

$$P(\theta_{\infty,k}) = \begin{pmatrix} \sin\theta_{\infty,k} & -\cos\theta_{\infty,k} \\ \cos\theta_{\infty,k} & \sin\theta_{\infty,k} \end{pmatrix}$$

Et la covariance de $(\cos\theta_{\infty,k}, \sin\theta_{\infty,k})^T$ devient alors :

$$\mathrm{cov}\Big((\cos\theta_{\infty,k}, \sin\theta_{\infty,k})\Big) = P(\theta_{\infty,k})^T \mathrm{diag}\Big((\varepsilon_\theta, \lambda\varepsilon_\theta)\Big) P(\theta_{\infty,k})$$

avec $\lambda \ll 1$ un coefficient permettant d'étirer la gaussienne et de maîtriser le conditionnement de la matrice de covariance. Il est possible d'utiliser également cette technique pour avoir une meilleure estimation de la covariance entre $cos\overline{\theta}$ et $sin\overline{\theta}$ dans la matrice $R_k$.

Pour le mode de réalisation dans lequel les mesures de la direction du vent au niveau du rotor sont biaisées par un mauvais alignement de la girouette de l'éolienne par rapport au nord théorique, on peut définir un état étendu $\tilde{x}_k$ comme la concaténation de $x_k$ et d'un vecteur $[\beta_1,...,\overline{\beta_{nturbines}}]^T$, avec $\beta_i$ le biais sur la mesure de la direction du vent de l'éolienne i.

La matrice de covariance de l'équation d'état dynamique pour l'état étendu est notée $\tilde{Q}_k$ et peut s'écrire :

$$\tilde{Q}_k = \begin{pmatrix} Q_k & 0 \\ 0 & \varepsilon_\beta I_{n_{\mathrm{turbines}}} \end{pmatrix}$$

Et l'équation dynamique peut s'écrire :

$$\tilde{x}_k = I_n \tilde{x}_{k-1} + \tilde{v}_{k-1}$$

$$\tilde{v}_k \in \mathbb{R}^n \sim \mathcal{N}(0, \tilde{Q}_k)$$

Avec , In la matrice identité de dimension n, n étant la dimension du vecteur $\tilde{x}_k$.

De plus, pour l'équation de sortie, on ajoute le biais $\beta_i$ à l'angle de lacet de chaque éolienne.

Les différentes mises en oeuvre décrites ci-dessus permettent de déterminer le vecteur d'état $x_k$ qui comporte plusieurs caractéristiques du vent libre, dont la vitesse du vent libre. En fonction du vecteur d'état x, on peut en extraire aisément la vitesse de vent libre.

Par exemple, si le vecteur d'état x s'écrit :

$$x_k = \begin{pmatrix} V_{\infty,k} \\ \theta_{\infty,k} \\ \log \mathrm{TI}_{\infty,k} \end{pmatrix}$$

alors on peut déterminer la vitesse de vent libre à l'instant k au moyen de l'équation :

$$V_{\infty,k} = (1 \quad 0 \quad 0) x_k$$

De la même manière on peut déterminer (facultativement) la direction de vent libre à l'instant k au moyen de l'équation :

$$\theta_{\infty,k} = (0 \quad 1 \quad 0) x_k$$

Et (facultativement) l'intensité de turbulence de vent libre à l'instant k au moyen de l'équation :

$$logTI_{\infty,k} = (0 \quad 0 \quad 1) x_k$$

La présente invention concerne également un procédé de contrôle d'une ferme d'éoliennes. Pour ce procédé, on met en oeuvre les étapes suivantes :

- on détermine la vitesse du vent libre au moyen du procédé de détermination de la vitesse du vent libre selon l'une quelconque des variantes décrites ci-dessus ;
- on contrôle la ferme d'éoliennes en fonction de la vitesse du vent libre.

La connaissance précise et en temps réel de la vitesse du vent libre permet un contrôle adapté de la ferme d'éoliennes, en termes de minimisation des effets sur la structure de l'éolienne et de maximisation de la puissance récupérée. En effet, au moyen de ce contrôle, le procédé permet de réduire les charges sur la structure, dont les pales et le mât représentent 54% du coût. Par conséquent, l'utilisation du procédé selon l'invention permet d'optimiser la structure de l'éolienne, et donc de diminuer les coûts et la maintenance.

Conformément à une mise en oeuvre de l'invention, on peut commander l'angle d'inclinaison des pales de chaque éolienne de la ferme d'éoliennes et/ou le couple électrique de récupération du générateur de chaque éolienne de la ferme d'éoliennes et/ou l'angle de lacet de chaque éolienne de la ferme d'éoliennes en fonction de la vitesse du vent libre. D'autres types de dispositif de régulation peuvent être utilisés.

La présente invention concerne également un procédé de surveillance et/ou diagnostic d'une ferme d'éoliennes. Pour ce procédé, on peut mettre en oeuvre les étapes suivantes :

- on détermine la vitesse du vent libre au moyen du procédé de détermination de la vitesse du vent selon l'une quelconque des variantes ou des combinaisons de variantes décrites ci-dessus ; et
- on surveille et/ou on diagnostique le fonctionnement de la ferme d'éolienne en fonction de la vitesse du vent libre.

La surveillance et/ou le diagnostic peut par exemple concerner la sollicitation mécanique subie par la structure de chaque éolienne en fonction de la vitesse du vent libre.

De plus, l'invention concerne un produit programme d'ordinateur, qui comprend des instructions de code agencés pour mettre en oeuvre les étapes de calcul d'un des procédés précédemment décrits (procédé de détermination de la vitesse du vent libre, procédé de contrôle, procédé de surveillance et/ou diagnostic). Le programme est exécuté sur une unité de contrôle et/ou de diagnostic de la ferme d'éoliennes.

L'invention concerne également une ferme d'éoliennes, notamment une ferme d'éoliennes offshore (en mer) ou onshore (sur terre). Au moins une éolienne de la ferme d'éoliennes est équipée de moyens de mesure la vitesse du vent dans le plan du rotor, la direction du vent dans le plan du rotor, de l'intensité de turbulence au niveau du rotor, et de moyens de mesure de la puissance générée par la machine de conversion. En outre, l'éolienne comporte des moyens de détermination de la vitesse du vent libre aptes à mettre en oeuvre le procédé de détermination du vent libre selon l'une des variantes ou des combinaisons de variantes décrites ci-dessus.

Selon un mode de réalisation de l'invention, au moins une éolienne peut comporter un système de contrôle et d'acquisition de données en temps réel (SCADA) qui dispose d'au moins un moyen de mesure parmi les moyens de mesure de la rotation du rotor, les moyens de mesure de l'angle d'inclinaison des pales, et les moyens de mesure de la puissance générée par la machine de conversion. De préférence, le système SCADA peut disposer de toutes ces mesures. En outre, le système SCADA peut comporter des moyens de mesure supplémentaires (par exemple températures, mesures électriques, ...) qui peuvent permettre de rendre la détermination de la vitesse du vent dans le plan du rotor plus précise.

Alternativement, au moins une éolienne peut comporter au moins un capteur pour réaliser au moins une de ces mesures. Il peut donc s'agir :

- pour la mesure de la vitesse de rotation du rotor, d'un capteur de rotation angulaire du rotor, et/ou
- pour la mesure de l'angle d'inclinaison des pales, d'un capteur angulaire des pales, et/ou
- pour la mesure de la puissance générée par la machine de conversion, d'un capteur de tension connue et contrôlée, et un capteur d'intensité pour la mesure du courant débité par la génératrice.

Pour un mode de réalisation du procédé de contrôle, la ferme d'éoliennes peut comprendre des moyens de contrôle, par exemple le contrôle de l'angle d'inclinaison (pouvant être traduit par angle de tangage) d'au moins une pale de l'éolienne ou le contrôle du couple électrique, ou le contrôle de l'angle de lacet de chaque éolienne, pour mettre en oeuvre le procédé de contrôle selon l'invention.

Comme il va de soi, l'invention ne se limite pas aux seules formes de réalisation des procédés décrits ci-dessus à titre d'exemple, elle embrasse au contraire toutes les variantes de réalisation.

**Exemple**

Les caractéristiques et avantages du procédé selon l'invention apparaîtront plus clairement à la lecture de l'exemple d'application ci-après.

Pour cet exemple, on considère une ferme d'éoliennes qui comprend sept éoliennes quasi-alignées (générant un fort effet de sillage). Les éoliennes de cette ferme ont un rotor de 82 m de diamètre, et une puissance nominale de 2 MW. De plus, on acquiert des mesures par des données SCADA de la ferme d'éoliennes.

La figure 2 illustre, pour cet exemple, les courbes de la vitesse du vent mesurée dans le plan du rotor de chaque éolienne Vt en m/s en fonction du temps T en s. Ce graphique représente les courbes quasiment superposées pour les sept éoliennes de la ferme.

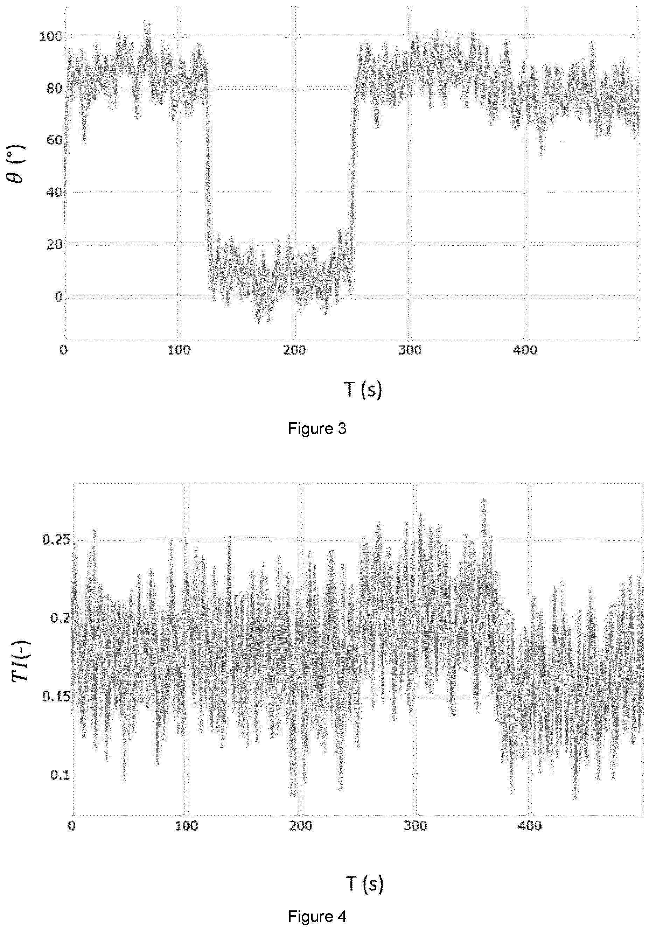

La figure 3 illustre, pour cet exemple, les courbes de la direction du vent mesurée dans le plan du rotor de chaque éolienne $\theta$ en ° en fonction du temps T en s. Ce graphique représente les courbes quasiment superposées pour les sept éoliennes de la ferme.

La figure 4 illustre, pour cet exemple, les courbes de l'intensité de turbulence dans le plan du rotor de chaque éolienne TI en fonction du temps T en s. Ce graphique représente les courbes quasiment superposées pour les sept éoliennes de la ferme.

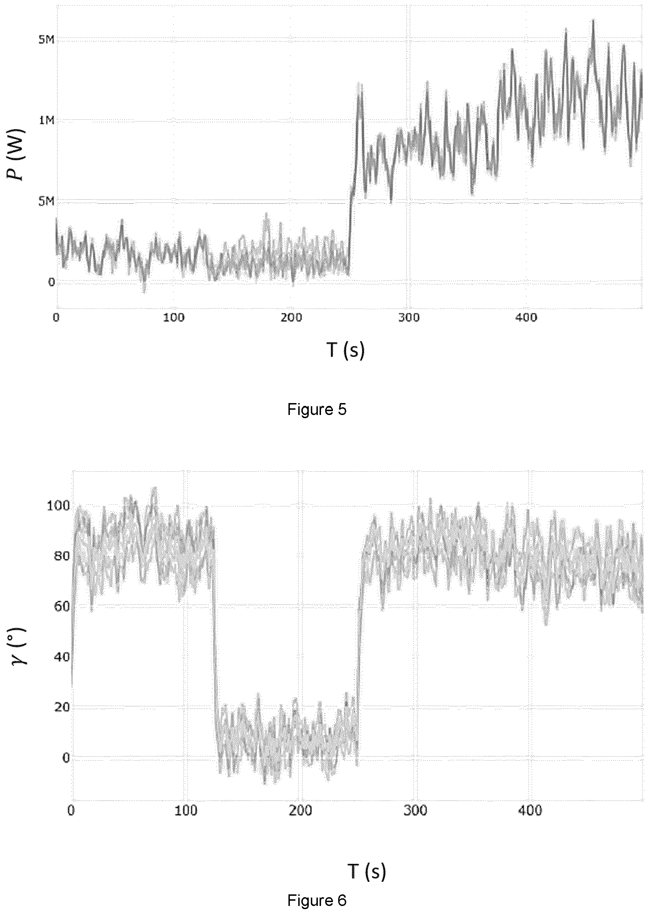

La figure 5 illustre, pour cet exemple, les courbes de la puissance générée mesurée pour chaque éolienne P en W en fonction du temps T en s. Ce graphique représente les courbes quasiment superposées pour les sept éoliennes de la ferme.

La figure 6 illustre, pour cet exemple, les courbes de l'angle de lacet mesuré pour chaque éolienne y en fonction du temps T en s. Ce graphique représente les courbes dans des plages de valeurs identiques pour les sept éoliennes de la ferme.

Dans un premier temps, on ne considère aucun biais d'alignement de la girouette de chaque éolienne par rapport au nord théorique. A partir de ces mesures, on applique un mode de réalisation de l'invention avec une méthode directe et un mode de réalisation avec une méthode trigonométrique.

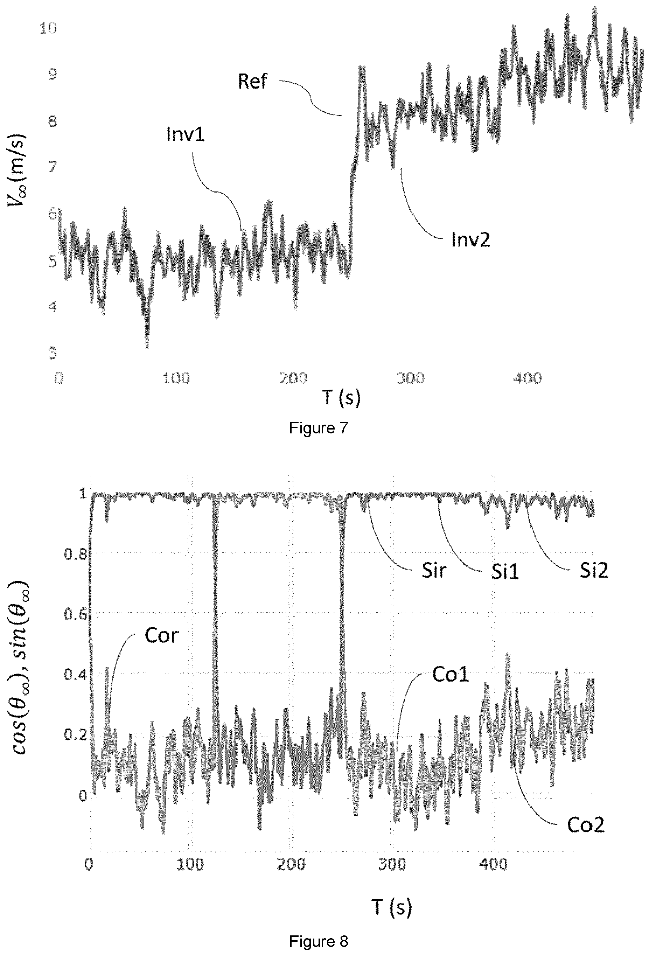

La figure 7 illustre, pour cet exemple, des courbes de la vitesse de vent libre $V_\infty$ en m/s en fonction du temps T en s. On représente la courbe de la vitesse de vent libre de référence Ref, la courbe de la vitesse de vent libre obtenue par la méthode directe Inv1 du procédé selon l'invention et la courbe de la vitesse de vent libre obtenue par la méthode trigonométrique Inv2 du procédé selon l'invention. On remarque que les courbes sont superposées. Ainsi, le procédé selon l'invention permet une détermination précise de la vitesse de vent libre.

La figure 8 illustre, pour cet exemple, des courbes du cosinus et du sinus de la direction du vent libre $cos(\theta_\infty)$, $sin(\theta_\infty)$. Les courbes commençant par Co correspondent aux cosinus, et les courbes commençant par Si correspondent aux sinus. Les courbes terminant par r correspondent à la référence, les courbes terminant par 1 sont celles obtenues par la méthode directe du procédé selon l'invention, et les courbes terminant par 2 sont celles obtenues par la méthode trigonométrique selon l'invention. On remarque que les courbes sont superposées. Ainsi, le procédé selon l'invention permet une détermination précise de la direction de vent libre.

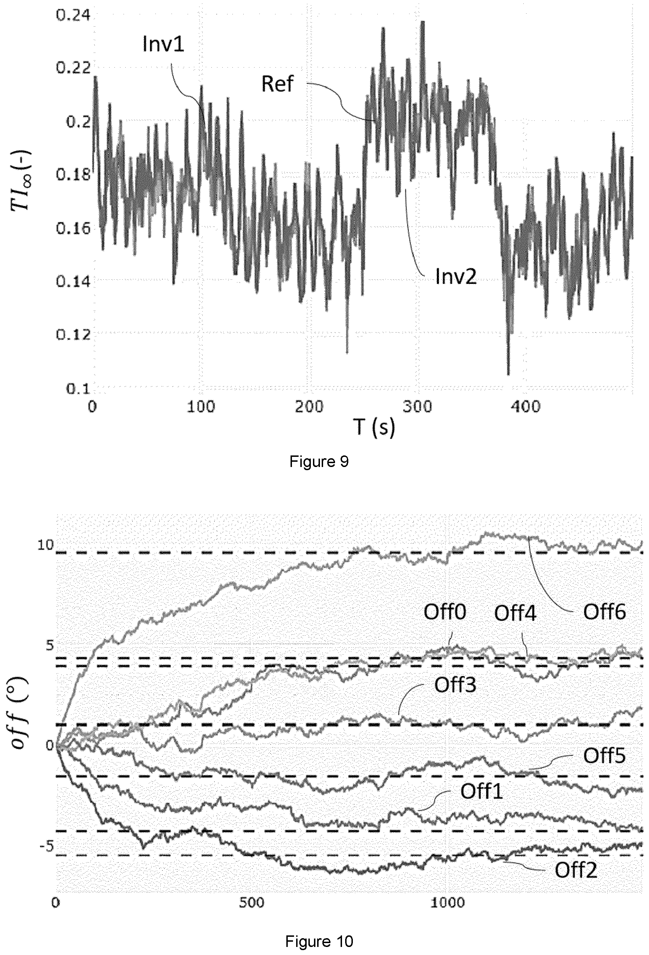

La figure 9 illustre, pour cet exemple, des courbes de l'intensité de turbulence de vent libre $TI_\infty$ en fonction du temps T en s. On représente la courbe de l'intensité de turbulence de vent libre de référence Ref, la courbe de l'intensité de turbulence de vent libre obtenue par la méthode directe Inv1 du procédé selon l'invention, et la courbe de l'intensité de turbulence de vent libre obtenue par la méthode trigonométrique Inv2 du procédé selon l'invention. On remarque que les courbes sont superposées. Ainsi, le procédé selon l'invention permet une détermination précise de l'intensité de turbulence de vent libre.

Dans un second temps, on considère un biais d'alignement de la girouette de chaque éolienne par rapport au nord théorique. A partir de ces mesures, on applique un mode de réalisation de l'invention avec une méthode directe et avec détermination du biais (i.e. le biais est une entrée du modèle de ferme d'éoliennes).

La figure 10 illustre, pour cet exemple, le biais Off en ° en fonction du temps T en s. Sur cette figure, les biais de référence sont indiqués par les traits pointillés. De plus, on représente les biais Off 1 à Off7 des sept éoliennes de la ferme obtenus par le procédé selon l'invention. On remarque que le procédé selon l'invention permet une bonne estimation du biais de chaque éolienne.

**Revendications**

1. Procédé de détermination de la vitesse de vent libre ($V_\infty$) pour une ferme d'éoliennes, **caractérisé en ce qu'**on met en oeuvre les étapes suivantes :

   a. On mesure (MES), pour au moins une éolienne de ladite ferme d'éoliennes, la vitesse du vent dans le plan du rotor de ladite éolienne, l'intensité de turbulence dans le plan du rotor de ladite éolienne, la direction du vent dans le plan du rotor de ladite éolienne, et la puissance générée par ladite éolienne ;
   b. On construit un modèle de ladite ferme d'éoliennes (MOD) qui relie au moins la vitesse de vent libre ($V_\infty$) à la vitesse du vent dans le plan du rotor, à l'intensité de la turbulence au niveau dans le plan du rotor, à la direction du vent dans le plan du rotor et à la puissance générée par chaque éolienne ; et
   c. On détermine la vitesse de vent libre ($V_\infty$) pour ladite ferme d'éoliennes au moyen d'un filtre de Kalman d'ensemble (KEN), notamment à partir d'incertitudes estimées par des tirages de Monte Carlo, appliqué audit modèle de ladite ferme d'éoliennes (MOD) et à partir desdites mesures (MES) de la vitesse du vent dans le plan du rotor, de l'intensité de la turbulence dans le plan du rotor, de la direction du vent dans le plan du rotor et de la puissance générée.

2. Procédé selon l'une des revendications précédentes, dans lequel ledit modèle de ferme d'éoliennes (MOD) relie en outre ladite direction de vent libre et/ou ladite intensité de vent libre à ladite vitesse du vent dans le plan du rotor, de l'intensité de la turbulence dans le plan du rotor, de la direction du vent dans le plan du rotor et de la puissance générée, et on détermine en outre une direction du vent libre et/ou une intensité de turbulence de vent libre.

3. Procédé selon l'une des revendications précédentes, dans lequel ledit modèle de ferme (MOD) et une matrice de covariance du filtre de Kalman d'ensemble (KEN) dépend d'un biais d'alignement entre le nord de la girouette d'au moins une éolienne et le nord théorique, et détermine en outre ledit biais d'alignement.

4. Procédé selon l'une des revendications précédentes, dans lequel la matrice de covariance de sortie dudit filtre de Kalman d'ensemble (KEN) dépend de fonctions trigonométriques de la direction du vent mesurée dans le plan du rotor, de préférence en prenant en compte la covariance entre lesdites fonctions trigonométriques.

5. Procédé selon l'une des revendications précédentes, dans lequel la matrice de covariance de l'erreur dudit filtre de Kalman d'ensemble (KEN) dépend d'une approximation de fonctions trigonométriques de la direction du vent libre, de préférence au moyen d'une gaussienne à deux dimensions axée sur la tangente d'un cercle unité de la direction du vent.

6. Procédé selon l'une des revendications précédentes, dans lequel on détermine ladite vitesse de vent libre ($V_\infty$) au moyen des étapes suivantes :

   i. on initialise k=0, le vecteur d'état $x_0$ et un état de la matrice de covariance $P(0|0)$ ;
   ii. à chaque instant k différent de 0, on propage l'incertitude sur l'estimation de l'état

   $$P_{k|k-1} = F_k P_{k-1} F_k^T + Q_{k-1}$$

   avec $F_k$ le modèle dynamique de l'état, $P_{k|k-1}$ la covariance d'erreur à partir des mesures dudit instant k-1, $P_{k-1}$ la variance d'erreur à partir des mesures dudit instant k-1 et $Q_{k-1}$ la matrice de covariance de l'erreur d'estimation sur $x_{k-1}$ ;
   iii. à chaque instant k différent de 0, on acquiert lesdites mesures y(k) ; et
   iv. à chaque instant k différent de 0, on détermine la vitesse du vent libre en tirant aléatoirement N états $\hat{X}_{k|k-1}$ = $\{\hat{x}_{k,1|k-1},...,\hat{x}_{k,N|k-1}\}$ selon une distribution gaussienne $\mathcal{N}$ ($x_{k|k-1}, P_{k|k-1}$) et en appliquant les équations suivantes

   $$K_k = P_{x,y} S_k^{-1}$$ et

   $$\hat{x}_k = \hat{x}_{k|k-1} + K_k \tilde{y}_k$$

   $$P_k = P_{k|k-1} - K_k S_k K_k^T$$

   avec k le temps discret, $K_k$ le gain du filtre Kalman d'ensemble, $P_{x,y}$ la covariance entre les états et les sorties du modèle de la ferme d'éoliennes, $S_k$ la covariance de l'erreur de prédiction du modèle, $P_{k|k-1}$ la covariance d'erreur à partir des mesures dudit instant k-1, $P_k$ la variance d'erreur à partir des mesures dudit instant k, $x_k$ l'estimation de l'état x à partir des mesures du temps k, $x_{k|k-1}$ l'estimation de l'état x à partir des mesures du temps k-1, $\tilde{y}_k$ la différence entre la sortie mesurée $y_k$ et la sortie donnée par le modèle de la ferme d'éoliennes à partir de l'état estimé à l'instant précédent.

7. Procédé selon l'une des revendications précédentes, dans lequel on mesure (MES) ladite vitesse du vent dans le plan du rotor, l'intensité de turbulence dans le plan du rotor, la direction du vent dans le plan du rotor et la puissance aérodynamique à partir de mesures de la vitesse de rotation du rotor, l'angle d'inclinaison des pales de l'éoliennes, et la puissance générée par l'éolienne.

8. Procédé de contrôle d'une ferme d'éoliennes, **caractérisé en ce qu'**on met en oeuvre les étapes suivantes :

   a. On détermine ladite vitesse de vent libre ($V_\infty$) au moyen du procédé selon l'une des revendications précédentes ; et
   b. On contrôle ladite ferme d'éoliennes en fonction de la vitesse de vent libre.

9. Ferme d'éoliennes **caractérisée en ce qu'**au moins une éolienne comporte des moyens de mesure de la vitesse du vent dans le plan du rotor de ladite éolienne, l'intensité de turbulence dans le plan du rotor de ladite éolienne, la direction du vent dans le plan du rotor de ladite éolienne, et la puissance générée par ladite éolienne, et **en ce que** ladite ferme d'éoliennes comprend des moyens de détermination de la vitesse de vent libre ($V_\infty$) apte à mettre en oeuvre le procédé selon l'une des revendications 1 à 7.

10. Ferme d'éoliennes selon la revendication 9, comportant un système de contrôle et d'acquisition de données en temps réel qui comprend lesdits moyens de mesure de la vitesse du vent dans le plan du rotor de ladite éolienne, l'intensité de turbulence du vent dans le plan du rotor, la direction du vent dans le plan du rotor de ladite éolienne, et la puissance générée par ladite éolienne.

Figure 1

Figure 2

Figure 3

Figure 4

Figure 5

Figure 6

Figure 7

Figure 8

Figure 9

Figure 10

Europäisches
Patentamt

European
Patent Office

Office européen
des brevets

# RAPPORT DE RECHERCHE EUROPEENNE

Numéro de la demande

EP 24 16 4018

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DOEKEMEIJER B M ET AL: "Ensemble Kalman filtering for wind field estimation in wind farms", 2017 AMERICAN CONTROL CONFERENCE (ACC), AACC, 24 mai 2017 (2017-05-24), pages 19-24, XP033109882, DOI: 10.23919/ACC.2017.7962924 * page 19, colonne 2, alinéa 3 - page 20, colonne 1, alinéa 1 * * II. Flow model; page 20, colonne 1 * * III.Ensemble Kalman Filtering; page 20, colonne 2 * * C. Model and observer tuning; page 22 * | 1,2,6-10 | INV. F03D17/00 |
| A | US 2021/262441 A1 (JACOBSEN JÖRN [DE]) 26 août 2021 (2021-08-26) * alinéa [0106] - alinéa [0107]; figures 3,9 * * alinéa [0134] - alinéa [0150] * | 1-10 | |
| | | | DOMAINES TECHNIQUES RECHERCHES (IPC) |
| A | US 2022/213870 A1 (DE BOT DENNIS [NL]) 7 juillet 2022 (2022-07-07) * le document en entier * | 1-10 | F03D |

Le présent rapport a été établi pour toutes les revendications

| Lieu de la recherche | Date d'achèvement de la recherche | Examinateur |
|---|---|---|
| La Haye | 17 juillet 2024 | Herdemann, Claire |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

EP 4 438 894 A1

## ANNEXE AU RAPPORT DE RECHERCHE EUROPEENNE
## RELATIF A LA DEMANDE DE BREVET EUROPEEN NO.

EP 24 16 4018

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2024

| Document brevet cité au rapport de recherche | Date de publication | Membre(s) de la famille de brevet(s) | Date de publication |
|---|---|---|---|
| US 2021262441 A1 | 26-08-2021 | BR 112019017649 A2 | 31-03-2020 |
| | | CA 3053618 A1 | 13-09-2018 |
| | | CN 110402330 A | 01-11-2019 |
| | | DE 102017105165 A1 | 13-09-2018 |
| | | EP 3592972 A1 | 15-01-2020 |
| | | JP 2020510781 A | 09-04-2020 |
| | | KR 20190122840 A | 30-10-2019 |
| | | US 2021262441 A1 | 26-08-2021 |
| | | WO 2018162706 A1 | 13-09-2018 |
| US 2022213870 A1 | 07-07-2022 | EP 3734063 A1 | 04-11-2020 |
| | | US 2022213870 A1 | 07-07-2022 |
| | | WO 2020221893 A1 | 05-11-2020 |

EPO FORM P0460

Pour tout renseignement concernant cette annexe : voir Journal Officiel de l'Office européen des brevets, No.12/82

# EP 4 438 894 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- FR 3107094
- US 20210279389 A